# EUROPEAN PATENT APPLICATION

(11) **EP 1 914 656 A1**
(43) Date of publication of application: **23.04.2008**
(21) Application number: 06782372.4
(22) Date of filing: 04.08.2006
(51) Int. Cl.: G06F 21/20, H04B 5/02, H04B 13/00, H04L 9/32

(54) **COMMUNICATION DEVICE AND COMMUNICATION SYSTEM**

(30) Priority: 05.08.2005 JP 2005228575
(71) Applicant: Sharp Kabushiki Kaisha, Osaka-shi, Osaka 545-8522 (JP)
(72) Inventor: TSUCHIYA, Shinichi, Chiba 290-0056 (JP)
(74) Representative: Müller, Frithjof E.
(86) International application number: PCT/JP2006/315514
(87) International publication number: WO 2007/018151

(57) **Abstract**

A communication device enabling a user to perform authentication by simple action with the use of physical information and to perform communication via user's body. An authentication device (10) has a communication section (30) for communicating via user's body, a communication terminal (31) for communications, a sensor section (26) for sensing physical information, an authentication section (20) for authenticating the physical information and user information, and a storage section (22) for storing the physical information. The sensor section (26) is placed so that a communication contact portion (62b) is in contact with the communication terminal (31) when the sensor section (62a) senses physical information. By this the user can perform, by simpler action, both authentication using physical information and communications via the user's body.

## Description

### TECHNICAL FIELD

The present invention relates to a communication device and communication system in which authentication is performed based on physical information unique to the body of a user such as a fingerprint, and in which communications are performed via the body of the user.

### BACKGROUND ART

In a conventional method of communication using the body of a user as a communication path, communications are performed with a transmitter, a receiver, and an authenticator (identification device). The transmitter includes: a data encoder that operates by modulating an electric field; an electrode transmitter; an electric field generator; and an electrode for coupling an electric field via the body of a user. The receiver includes an electrode and a demodulator. The authenticator is connected to the receiver.

In a communication method of Patent Publication 1, the body of the user mediates the transmission of information concerning the user. This prevents a signal leak and protects privacy of the user.

Further, the foregoing publication uses a data communication device including: two electrodes disposed to face the user's body; a storage section for storing transmitted and received data; a modulating section for modulating transmission data; a voltage applying section for applying a voltage across the two electrodes based on a modulated signal from the modulating section; a fingerprint reading section; a fingerprint data verifying section; and a state control section for enabling communications when the fingerprint data matches in the fingerprint data verifying section.

In a communication device of Patent Publication 2, a device mounted on a user's body is used to verify fingerprint data, and communications are enabled when the verification is success. This enables authentication with simple operations and thereby allows data communications with high-level security.

Further, there has been used a security system including: an unlock detecting section for detecting unlocking of a locking device of an entrance door; a fingerprint comparing section for comparing fingerprint data entered through a fingerprint sensor of a door knob with pre-stored fingerprint data; and physical information comparing means for unlocking an electronic key when the fingerprint data match, and sending the date and time along with identification information of a computer to a computer of a security company and storing the data when the fingerprint data does not match.

In a security system of Patent Publication 3, only a person with a registered fingerprint is allowed to unlock, and an alert is sent when a non-registered person attempts unlocking. In this way, a security system is realized that has good deterrent effect against crimes.
[Patent Publication 1]
Japanese Laid-Open Patent Publication No. 10-228524 (published on August 25, 1998)
[Patent Publication 2]
Japanese Laid-Open Patent Publication No. 2003-132031 (published on May 9, 2003)
[Patent Publication 3]
Japanese Laid-Open Patent Publication No. 2002-183843 (published on June 28 2002)

### DISCLOSURE OF INVENTION

In the configuration of Patent Publication 1, however, the confirmation is automatic and it involves no human intervention. This means that anyone can be successfully authenticated if he/she has the transmitter. This is problematic in terms of security when the transmitter is lost or stolen.

In the configuration of Patent Publication 2, the user is first authenticated through a fingerprint using a communication device provided for the user. The user then touches a conducting member of information input means to enable communications mediated by the body of the user. This requires more than one action for the user, and the user is required to make complicated action. Further, since the user is authenticated using the communication device provided for the body of the user, there is a possibility that someone else may pretend as the user and illegally enter authentication information.

The present invention was made in view of the foregoing problems, and it is an object of the present invention to provide a communication device in which a user can make simple action to enable both authentication using physical information (biometrics information) and communications using the user's body.

In order to solve the foregoing problems, a communication device according to the present invention includes: a communication terminal for transmitting and receiving information via a body of a user; a communication terminal which is brought into contact with the body of the user when the communication terminal performs communications; sensing means for sensing physical information, which is information unique to the body of the user, from an authentication portion of the body of the user; and authentication means for authenticating the user based on the physical information sensed by the sensing means from the authentication portion, the communication terminal being disposed to enable communications via the body of the user when the sensing means senses the physical information from the authentication portion.

According to this arrangement, the sensing means of the communication device senses physical information, which is information unique to the body of the user, from the authentication portion. The user is authenticated based on the physical information. Further, in the communication device, the user brings his/her body part into contact with the communication terminal, and the body of the user is used as a communication path for communications with, for example, a terminal owned by the user.

As the sensing means, a biometrics sensor may be used. The communication device owned by the user is, for example, a wristwatch or a card-like terminal mounted on the body of the user. The terminal has a communication terminal in contact with the body of the user.

In the communication device, the sensing means and the communication terminal are disposed such that the user is in contact with the communication terminal for body-mediated communications when the user makes action to enter physical information to the sensing means through the authentication portion. In this way, sensing of physical information and the communications can be performed at the same time without requiring the user to move different body parts for these purposes.

That is, sensing of physical information from the authentication portion and the communications using the body of the user can be performed simultaneously in one action without having the user move different body parts for these purposes.

As a result, a communication device is realized that requires simple action to perform both the authentication using physical information and the communications using communication.

Additional objects, features, and strengths of the present invention will be made clear by the description below. Further, the advantages of the present invention will be evident from the following explanation in reference to the drawings.

### BRIEF DESCRIPTION OF DRAWINGS

Figure 1 is a block diagram schematizing a structure of a communication system according to one embodiment of the present invention.
Figure 2 is a functional block diagram showing a detailed structure of an authentication device included in the communication system shown in Figure 1.
Figure 3 is a flowchart representing a flow of an authentication process of the authentication device shown in Figure 2.
Figure 4 is a flowchart representing a flow of another authentication process different from that shown in Figure 3.
Figure 5 is a flowchart representing a flow of another authentication process different from that shown in Figure 3 or 4.
Figure 6 is a flowchart representing a flow of an authentication process performed when there is authentication error, in the authentication process represented in Figure 3.
Figure 7(a) represents a side view and a plan view of an exemplary arrangement of the authentication device shown in Figure 2, illustrating a layout of a communication terminal so positioned as to be brought into contact with a wrist, when a sensor section is provided as a sensor that senses physical information from a hand, a finger, a wrist, or an arm.
Figure 7(b) represents a side view and a plan view of an exemplary arrangement of the authentication device shown in Figure 2, illustrating a layout of a communication terminal so positioned as to be brought into contact with a fingertip, when a sensor section is provided as a sensor that senses physical information from a hand, a finger, a wrist, or an arm.
Figure 7(c) represents a side view and a plan view of an exemplary arrangement of the authentication device shown in Figure 2, illustrating a layout of a communication terminal so positioned as to be brought into contact with a wrist, when a sensor section is provided as a sensor that senses physical information from a hand, a finger, a wrist, or an arm.
Figure 8 is a schematic diagram of an exemplary arrangement of the authentication device shown in Figure 2, illustrating a layout of a communication terminal and a sensor section for sensing physical information from a fingertip.
Figure 9(a) is an explanatory diagram of an exemplary arrangement of the authentication device shown in Figure 2, illustrating an arrangement in which a sensor section and a communication terminal are provided in a portable terminal.
Figure 9(b) is an explanatory diagram of an exemplary arrangement of the authentication device shown in Figure 2, illustrating a structure in which a sensor section and a communication terminal are provided in a portable terminal.
Figure 10 is a schematic diagram of an exemplary arrangement of the authentication device shown in Figure 2, illustrating a layout of a communication terminal and a sensor section for sensing physical information from a face, an eye, a chin, a neck, or a head.
Figure 11 is a schematic diagram of an exemplary arrangement of the authentication device shown in Figure 2, illustrating a layout of a communication terminal and a sensor section for sensing physical information, when the authentication process performed on a user assuming an upright position.

### REFERENCE NUMERALS

- 1: Communication system
- 10: Authentication device (communication device)
- 20: Authentication section (authentication means)
- 22: Storage section
- 26: Sensor section (sensing means)
- 30: Communication section (communication means)
- 31: Communication terminal
- 40: Control section
- 50: Input and output section
- 62: Body part
- 62a: Authentication portion
- 62b: Communication contact portion
- 70: Portable terminal (terminal)
- 72: Communication section
- 74: Control section
- 76: Storage section
- 102: Sensor section (sensing means, capturing means)
- 106: Communication terminal
- 108a: Authentication portion
- 108b: Communication contact portion
- 110: Light source section
- 112: Grip portion
- 120: Authentication device (communication device)

### BEST MODE FOR CARRYING OUT THE INVENTION

### [First Embodiment]

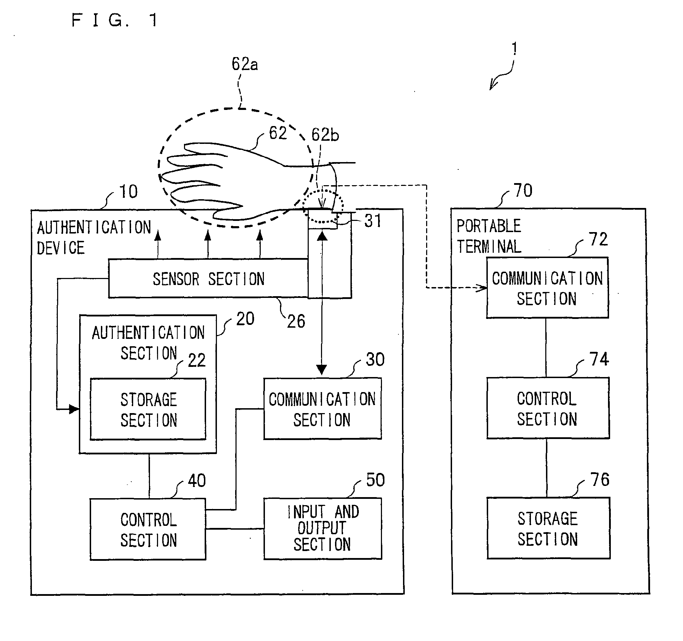

The following will describe one embodiment of the present invention with reference to Figure 1 through Figure 7.

Figure 1 is a diagram schematizing an arrangement of a communication system according to the present embodiment.

A communication system 1 is a system including an authentication device (communication device) 10 and a portable terminal (terminal) 70, and using a user's body as a communication path.

The authentication device 10 is provided to sense and authenticate physical information, known as biometrics information, which is information unique to each different body part. Here, a vein sensor is provided as the authentication device 10. A communication terminal 31 is provided on a pillow-like support section, which supports a wrist (communication contact portion) of a user when sensing physical information from a hand (authentication portion) put on a sensor section (sensing means, capturing means) 26.

A portable terminal 70 is a wrist watch or a card-like terminal worn by a user, and is in contact with the body of the user via a communication terminal (not shown).

When sensing physical information, the communication system 1 asks the user to hold up his/her hand (authentication portion) on the sensor section 26. With the hand put on the sensor section 26, the wrist (communication contact portion) is in contact with the communication terminal 31. The authentication device 10 and the portable terminal 70 perform communications using the user's body as a communication path. In this way, sensing of physical information and communications can be performed in one action without moving different body parts for these purposes.

In the following, detailed description is made as to each component of the communication system 1.

The authentication device 10 includes an authentication section 20, a sensor section 26, a communication section (communication means) 30, a communication terminal 31, a control section 40, and an input and output section 50. The authentication device 10 may be used for an entry/exit control system, a self-locking door, a computer login system, a keyless entry system, an automated refund machine, a settlement device for digital money, or other types of authentication devices, for example.

The portable terminal 70 includes a communication section 72, a control section 74, and a storage section 76. The portable terminal 70 is provided to perform communications with various types of authentication devices as exemplified above. Specifically, the portable terminal 70 communicates with the authentication device 10 to send information such as a user ID or other types of IDs, and receive and store data such as a communication log or contents data, or information concerning rights such as entry rights or digital money.

The authentication section 20 verifies and authenticates the physical information of the authentication portion 62a entered from the sensor section 26. The authentication section 20 includes a storage section 22.

The authentication section 20 notifies the control section 40 of successful authentication when the entered physical information matches physical information stored in the storage section 22. When the authentication has failed, the authentication section 20 notifies the control section 40 as such.

The storage section 22 stores physical information to be compared with the entered physical information for verification. The physical information used for authentication may be pre-stored in the authentication device 10 by a user, for example.

The sensor section 26 is a sensor, known as a biometrics sensor, for entering physical information of the authentication portion 62a. The physical information refers to information unique to different parts or characteristics of the body, for example, such as a fingerprint, palm shape, veins, retina, iris, voiceprint, facial characteristics, bone structures, denture mold, handwriting, tool pressure, or genes. The sensor section 26 is used to enter such physical information, or image information that is subjected to image processing or the like to obtain physical information, for example.

The communication section 30 is provided to perform communications with the portable terminal 70 via the communication terminal 31. Data are transmitted and received to/from the portable terminal 70 by being modulated and demodulated. Under the instructions of the control section 40, the communication section 30 communicates with the portable terminal 70 with regard to success and/or failure of the authentication.

The communication terminal 31 is in direct contact with the communication contact portion 62b so as to use the user's body as a conductor for communications. The communication terminal 31 is positioned such that the communication contact portion 62b is naturally brought into contact with the communication contact portion 62b when the authentication portion 62a is moved to the sensor section 26 to perform authentication with the physical information entered from the sensor section 26.

The control section 40 is provided to control the respective components of the authentication device 10. The control section 40, upon receipt of a notification concerning success or failure of authentication from the authentication section 20, instructs the communication section 30 to perform communications with the result of authentication.

Some of the examples of instructions given by the control section 40 includes: execution of input control of physical information from the sensor section 26; reception of results of authentication performed by the authentication section 20; transmission of results of communication of the communication section 30 to the authentication section 20; control based on operations entered through the input and output section 50; and display of results of operation to the input and output section 50.

When the authentication is success, the control section 40 may perform data communication as intended. Specifically, the control section 40 may instruct data communication in which, for example, data such as a communication log or content information, or information concerning rights such as entry rights or digital money are transmitted and stored in the storage section 76 of the portable terminal 71.

When the authentication has failed, the control section 40 may instruct data communication for preventing illegal use. For example, the control section 40 may instruct communication in which information such as an error log, portable terminal ID, user information, or owner information stored in the storage section 76 of the portable terminal 70 are received and obtained.

The input and output section 50 is provided to operate the authentication device 10 and display operation results and guidance. The input and output section 50 includes at least one of a display, a touch panel, a keyboard, buttons, switches, a card reader, a speaker, and other types of input and output devices.

The communication section 72 is provided to perform communications with the authentication device 10 via a communication terminal (not shown) of the portable terminal 70. Data are transmitted to the authentication device 10 and received from the authentication device 10 by being modulated and demodulated.

The control section 74 is provided to control the respective components of the portable terminal 70. The control section 74 instructs the timing of communication by the communication section 72, or reading/writing of various information stored in the storage section 76, so as to control transmission and reception of information to and from the authentication device 10 via the communication section 72.

The portable terminal 70 is a communication terminal of a form always in contact with the body of the user. For example, the portable terminal 70 is provided in the form of a wristwatch or an IC card kept in a pocket. However, the portable terminal 70 is not just limited to these examples as long as is can be kept by the user and is capable of performing communications, as required, to input and output necessary data.

The authentication device 10 and the portable terminal 70 are used in this manner to perform user-mediated communications. By looking at the guidance displayed in the input and output section 50, the user operates the input and output section 50 to enter physical information in the sensor section 26 and perform communications via the communication terminal 31. As required, the authentication device 10 communicates with the portable terminal 70 to authenticate the entered physical information and user information, and performs various actions according to the result of authentication.

As described above, the authentication device 10 of the present embodiment includes the communication section 30, the communication terminal 31 for performing communications, the sensor section 26 for sensing physical information, and the authentication section 20 for authenticating the physical information and user information. In the authentication device 10, the sensor section 26 is disposed such that the communication contact portion 62b is brought into contact with the communication terminal 31 when sensing the physical information of the authentication portion 62a.

In this way, the user in contact with the sensor section 26 for entering the physical information is also in contact with the communication terminal 31 for communications. This enables communications without having the user consciously move a body part 62 both for the authentication process and the communication process. That is, sensing and communication of the physical information can be performed in one action without requiring the user to move different body parts for these purposes.

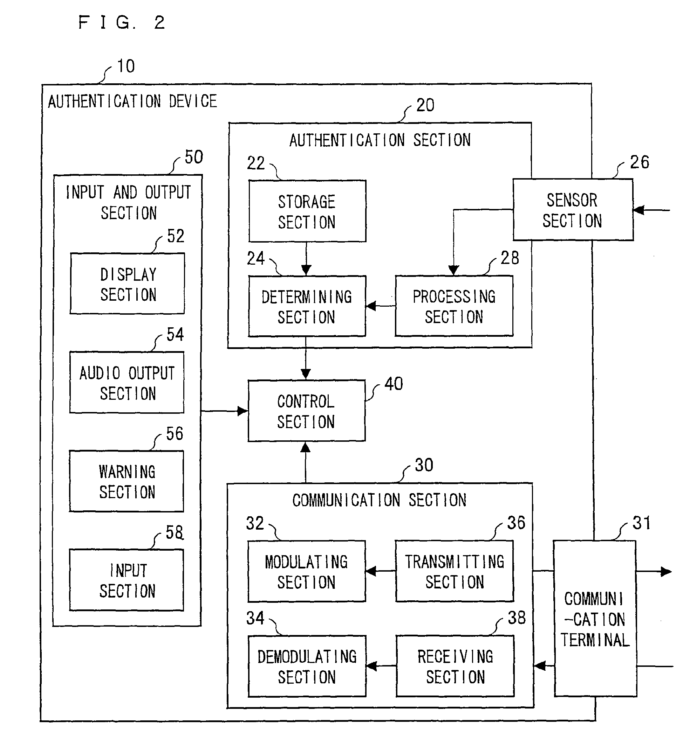

Figure 2 is a block diagram representing a main configuration of the authentication device 10 used in this embodiment.

The authentication device 10 includes the authentication section 20, the sensor section 26, the communication section 30, the communication terminal 31, the control section 40, and the input and output section 50.

The authentication section 20 includes the storage section 22, a determining section 24, and a processing section 28. The storage section 22 stores user information to be authenticated. The user information stored in the storage section 22 may be distributed beforehand from a host, or may be downloaded from a host according to user operations. Further, the user information may be obtained from the storage section 76 of the portable terminal 70 via the communication terminal 31.

For authentication, the determining section 24 verifies the physical information entered from the sensor section 26 with the user information stored in the storage section 22. The processing section 26 processes data including the physical information, for example, such as inputted images, to extract therefrom characteristic information specifying the person of interest.

The sensor section 26 is a sensor used to enter the physical information (biometrics information), and it may be a fingerprint sensor, a palm shape sensor, a vein sensor, a retina sensor, an iris sensor, a voiceprint sensor, a facial characteristic sensor, a bone structure sensor, a denture mold sensor, a handwriting sensor, a tool pressure sensor, a gene sensor, or other types of sensors for entering information unique to different body parts. In the present embodiment, description is given through the case of an image sensor for entering information of the veins in the palm.

The communication section 30 performs communications via the communication terminal 31, and it includes a modulating section 32, a demodulating section 34, a transmitting section 36, and a receiving section 38. The modulating section 32 modulates data to be transmitted to the transmitting section 36. The demodulating section 34 demodulates data received from the receiving section 38 and sends it to the control section 40. The transmitting section 36 and the receiving section 38 send and receive data to and from an external device via the communication terminal 31.

The control section 40 is provided for the control of the respective components of the authentication device 10 and for the transmission and reception of data between the respective components of the authentication device 10.

The input and output section 50 outputs guidance for the user and allows the user to make entry. The input and output section 50 includes a display section 52, an audio output section 54, a warning section 56, and an input section 58.

The display section 52 is for displaying various kinds of information, and is realized by a liquid crystal panel for example. The display section 52 may be provided as a touch panel with the input section 58. The audio output section 54 outputs audio guidance to the user for making entry, and is realized by a speaker for example.

The warning section 56 gives out a warning concerning user entry and results of authentication. The warning section 56 is realized by a siren, a flasher, or a vibrator, for example. The warning section 56 may be provided with a camera for capturing images of the user, a communication device for alerting a security company, a door locking system for locking a thief, a color ball firing system for specifying a user, or other kinds of security systems.

A notification by sound, light, or any other indication may be given not only in the event of authentication error but in successful authentication as well. In this case, it is preferable to make a distinction between success and failure of authentication, for example, by outputting different sounds or tones, or by changing colors of light, display methods, messages, or vibration methods.

The input section 58 is provided to input user entry to the authentication device 10, and is realized by a keyboard, buttons, switches, or a touch panel, for example.

In order to realize various functions in the authentication device 10, the input and output section 50 may be provided with input and output devices such as a magnetic card reader, an IC card communication device, a cash panel, a radio communication terminal, a memory card reader, a portable phone connection terminal, a PC and portable terminal connection terminal, a USB (Universal Serial Bus) terminal, an IEEE (Institute of Electronic and Electronics Engineers) 1394 terminal, an Ethernet® terminal, an infrared ray communication terminal, a network connection terminal, a communication line, a wireless LAN device, and a printer.

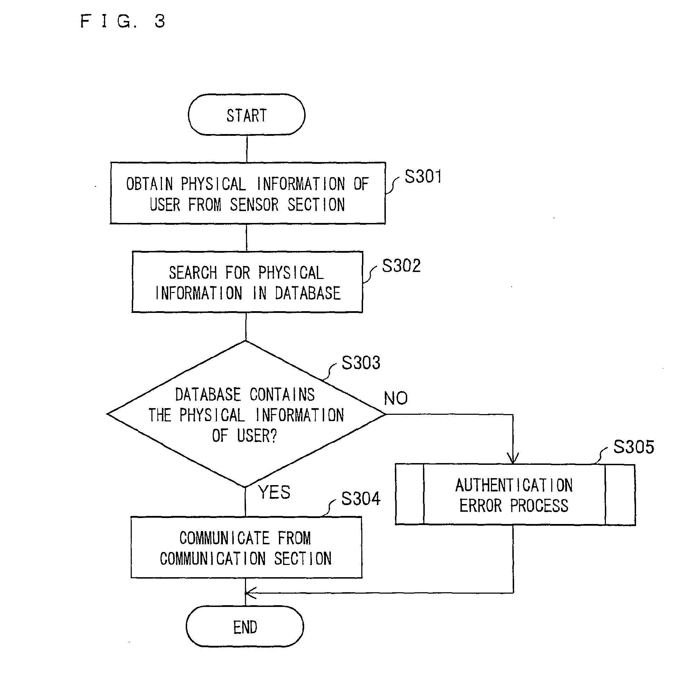

The following will describe a flow of various processes performed in the authentication device 10, with reference to Figure 3 through Figure 6.

Figure 3 is a flowchart representing a flow of the authentication process performed in the authentication device 10 of the present embodiment.

First, in S301, the physical information of the authentication portion 62a is entered through the sensor section 26 of the authentication device 10. The communication system 1 shown in Figure 1 uses information of veins in a palm, and as such the sensor 26 captures images of veins in the palm irradiated with a near infrared LED. The processing section 28 processes the captured images and extract therefrom characteristic information specifying the person of interest.

In S302, the determining section 24 make a search in the storage section 22 to find data matching the extracted characteristic information.

In S303, the determining section 24 determines whether the user information obtained by the search and the extracted characteristic information are present in database of the storage section 22. If there is a match (YES in S303), the sequence goes to S304. If there is no match (NO in S303), the sequence goes to S305.

If the physical information entered through the sensor section 26 matched the physical information stored in the database of the storage section 22 (YES in S303), the control section 40 in S304 enables data communications with the portable terminal 70 via the communication contact portion 62b, using the communication section 30. Here, description is made through the case where the result of authentication of the physical information and the time of authentication process are sent to the storage section 76 of the portable terminal 70 from the authentication device 10.

It should be noted however that the data communication may be charging of digital money, or transmission of authentication results. Further, the data communication may be transmission of entry/exit control data, login information, settlement data, or any other data.

If the physical information entered through the sensor section 26 did not match the physical information registered in the database of the storage section 22 (NO in S303), the control section 40 in S305 causes the authentication device 10 perform an authentication error process, which will be described later.

This completes the authentication process in the authentication device 10.

As described above, the communication section 30 of the authentication device 10 performs communications via the communication terminal 31, when the authentication in the authentication section 20 is success.

Note that, the communication section 30 of the authentication device 10 may be connected to an external communication device, and the control section 40 may allow the portable terminal 70 to communicate with the external communication terminal when the authentication is success.

By the action for the authentication process using the authentication portion 62a, the user is in contact with the communication terminal 31 via the communication contact portion 62b. In this way, in the authentication device 10, communications using communication can be performed in one action when performing the authentication process using the physical information, without having the user move the body part 62 again when the authentication is success.

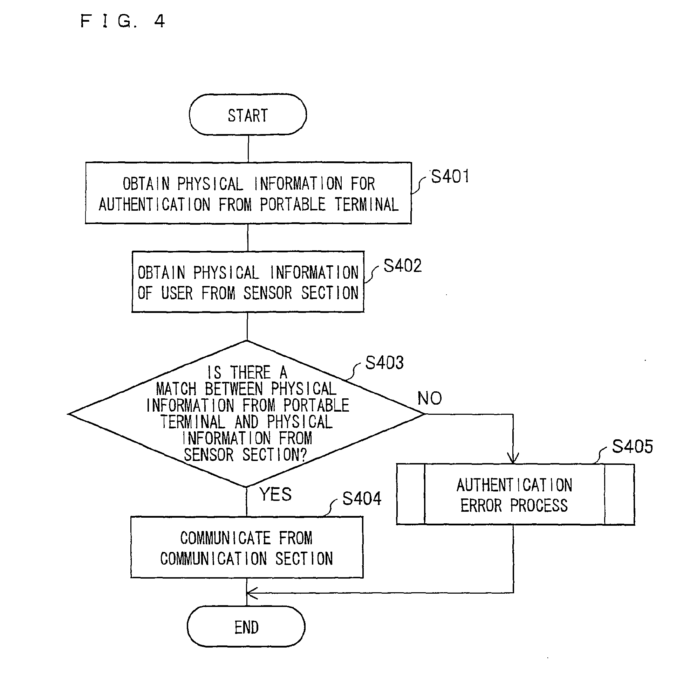

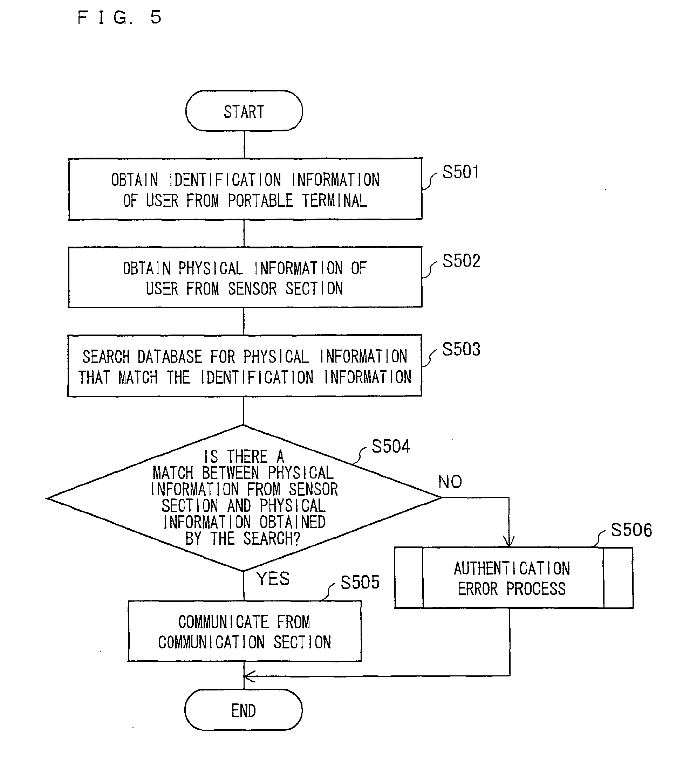

The authentication process may be performed according to the flowcharts shown in Figures 4 and 5. The following describes authentication processes that follow the flowcharts of Figures 4 and 5.

Figure 4 shows a flowchart representing a flow of an authentication process different from that shown in Figure 3.

First, in S401, the authentication device 10 performs communications, and physical information to be authenticated is obtained from the portable terminal 70.

In S402, the authentication device 10 obtains physical information through the sensor section 26. The processing section 28 processes the physical information so obtained, and performs calculations to extract characteristic information specifying the person of interest.

In S403, the determining section 24 determines whether the physical information obtained from the portable terminal 70 matches the extracted characteristic information. If there is a match (YES in S403), the sequence goes to S404. If there is no match (NO in S403), the sequence goes to S405.

If the physical information obtained from the portable terminal matched the extracted characteristic information (YES in S403), the control section 40 in S404 enables data communications with the portable terminal 70 using the communication section 30. Here, description is made through the case where the result of authentication of the physical information and the time of authentication process are sent to the storage section 76 of the portable terminal 70 from the authentication device 10.

If the physical information obtained from the portable terminal 70 does not match the extracted physical information (NO in S403), the control section 40 in S405 causes the authentication device 10 to perform an authentication error process, which will be described later.

This completes the authentication process in the authentication device 10.

Figure 5 shows a flowchart representing a flow of an authentication process different from that shown in Figure 3 or 4. In the authentication process shown in Figure 5, the authentication device 10 uses identification information for identifying a user, in order to provide services according to the identification information.

Examples of services that identify a user using the identification information include services using registered IDs, such as balance inquiry at the ATM of the bank, balance inquiry or account reconciliation in prepaid systems, and reward card systems for retailers.

First, in S501, the authentication device 10 obtains identification information of a user. The identification information of a user may be read out from the storage section 76 of the portable terminal 70, may be entered by a user through the input section 58, or may be read from a magnetic card or the like.

In S502, the authentication device 10 obtains physical information of the user from the sensor section 26. The processing section 28 processes the physical information so obtained, and performs calculations to extract therefrom characteristic information specifying the person of interest.

In S503, the determining section 24 makes a search in the storage section 22 to find data matching the extracted characteristic information.

In S504, the determining section 24 determines whether the physical information corresponding to the user information found by the search matches the extracted characteristic information. If there is a match (YES in S504), the sequence goes to S505. If there is no match (NO in S504), the sequence goes to S506.

If the physical information corresponding to the user information found by the search matched the extracted characteristic information (YES in S504), the control section 40 in S505 enables communications with the portable terminal 70 using the communication section 30.

If the physical information corresponding to the user information did not match the physical information entered from the sensor section 26 (NO in S504), the control section 40 in S506 performs an authentication error process, which will be described later.

This completes the authentication process using user identification information in the authentication device 10.

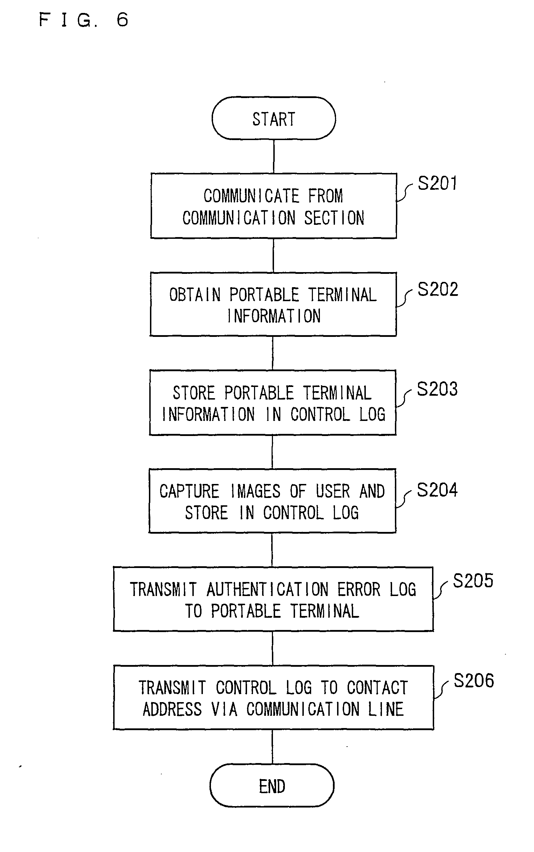

The following will describe the authentication error process. Figure 6 shows a flowchart representing a flow of the authentication error process in the authentication device 10.

First, in S201, the authentication device 10 performs communications with the portable terminal 70 using the communication section 30.

In order to find whether the portable terminal 70 is used by an authorized user, the authentication device 10 in S202 obtains security information of the portable terminal 70 from the portable terminal 70. The security information may be, for example, a serial number of the portable terminal 70, a MAC address or other characteristic IDs of hardware, owner information of the portable terminal 70, or a communication log of the portable terminal 70.

In S203, the authentication device 10 stores the security information of the portable terminal 70 in a control log. The control log may be stored in the storage section 22, or may be stored in the database of the host via a network. The control log may include characteristic ID of the authentication device 10, authentication time, authentication results, and error code, for example.

In S204, the authentication device 10 captures images of the user, using a security camera (not shown) provided in the warning section 56, and stores the images in the control log. Images of the user are captured as an aid to specify unauthorized users of the portable terminal 70. However, images of the user may be captured not only when the authorization has failed but when it has succeeded as well.

In S205, the authentication device 10 transmits the control log to the portable terminal 70 using the communication section 30. In the case where the control log received by the portable terminal 70 indicates authentication error, the portable terminal 70 may performs a security process for preventing unauthorized use of the portable terminal 70, for example, by asking the user to enter a password for confirmation.

In S206, the control section 40 transmits the control log indicative of authentication error to a preset contact address via communication lines. Here, the warning section 56 of the authentication device 10 may be used to give warnings in the form of sound, light, display, or vibration, for example. Further, in order to give such warning from the portable terminal 70, a control command or the like may be sent to the portable terminal 70.

This completes the authentication error process in the authentication device 10. As described above, in the authentication device 10, the communication section 30 sends information indicative of authentication error via the communication terminal 31, when the authentication by the authentication section 20 has failed.

The action the user makes for the authentication process brings the communication contact portion 62b into contact with the communication terminal 31, enabling the communications using communication to be performed simultaneously. Further, the control log indicative of authentication error can be stored in the storage section 76 of the portable terminal 70 of the user.

In the case where the authentication in the authentication section 20 has failed, the communication section 30 of the authentication device 10 receives the user information via the communication terminal 31 and performs a predetermined authentication error process.

In the case where the authentication process using the physical information has failed, the authentication device 10 may communicate with, for example, the portable terminal 70 of the user and obtain the information stored in the portable terminal 70, so as to perform processes for authentication error.

Examples of processes for authentication error include: obtaining the ID of the user owning the portable terminal 70; storing the owner ID; sending a notification to a contact address of the owner identified by the ID; capturing images of the authenticated user; and warning the authenticated user by light, sound, vibration, or the like. Further, the authentication device 10 may determine whether there is unauthorized use of the portable terminal 70, by referring to the contact address, or the control log on a host computer.

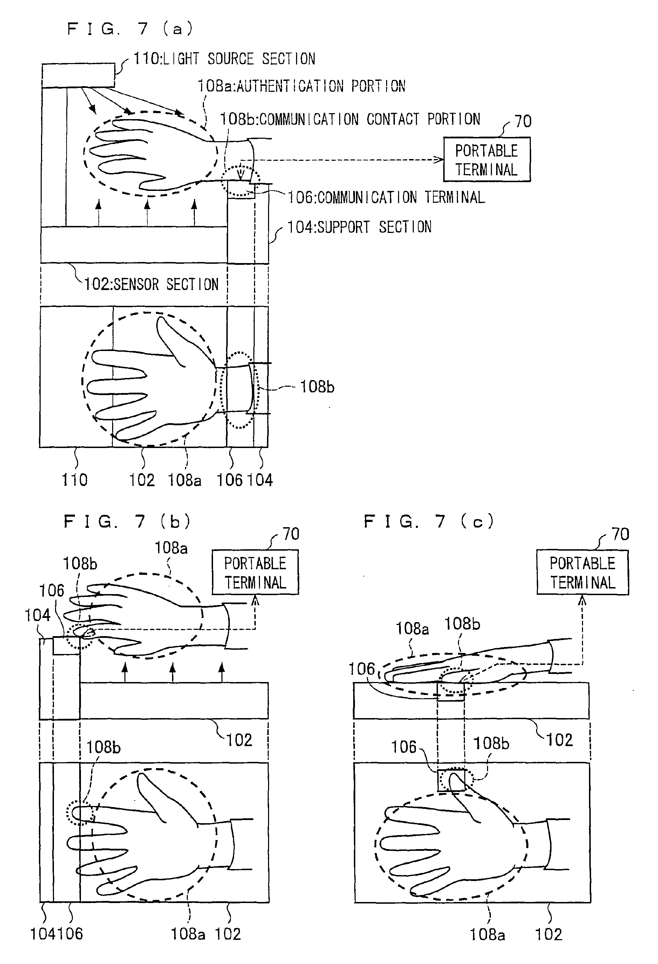

In the following, description is made as to the layout of the sensor for entering the physical information, and of the communication terminal, with reference to Figure 7.

Figure 7 represents a side view and an upper view showing positions of a sensor section 102 and a communication terminal 106 in the authentication device 10. Figure 7 shows an exemplary layout of the sensor for sensing the physical information from an authentication portion 108a, which may be a palm, a finger, a wrist, or an arm.

Figure 7(a) shows an embodiment in which the communication terminal 106 is provided on a support section 104 where the wrist is placed. Specifically, an exemplary layout of the sensor and the communication terminal is shown.

The sensor section 102 is provided horizontally with respect to the authentication portion 108, which is a palm in this example. Generally, the sensor section 102 is provided horizontally and upwardly with respect to ground. A user spreads his/her palm horizontally with respect to the sensor section 102 to enter the physical information. The sensor section 102 is a vein sensor that captures the veins of the palm.

The support section 104 is provided to support the arm or wrist when the user enters the physical information by horizontally spreading the palm with respect to the sensor section 102. The support section 104 extends out perpendicularly with respect to the sensor section 102. On the support section 104, the communication terminal 106 is provided that is brought into contact with the communication contact portion 108b.

The communication terminal 106 is disposed on the support section 104, and is positioned such that it is in contact with the arm or wrist and enables communications while the support section 104 supports the palm being held up to enter the physical information. A sensor (not shown) may by disposed in the vicinity of the communication terminal 106 to determine whether the arm or wrist is on a predetermined position and notify the user whether communications are enabled.

The authentication portion 108a is at least one of a fingertip, a palm, a wrist, and an arm. The authentication device 10 uses the authentication portion 108a to enter physical information, and the communication contact portion 108b as a communication path to perform communications in contact with the communication terminal 106.

The sensor section 102 and the communication terminal 106 are positioned such that the communication contact portion 108b is always in contact with the communication terminal 106 when the authentication portion 108a is set in position for the sensor section 102 to enter the physical information.

A light source section 110 is provided to irradiate the authentication portion 109a with light needed to enter the physical information through the sensor section 102. When vein information is entered through the palm, a near infrared LED is used as a light source. Depending on the subject used for the entry or capturing, a white light or a laser beam may be used as a light source.

When vein information from the palm is entered as physical information, the sensor section 102 uses an image input device, such as a camera, that captures images of the palm being irradiated by the light source section 110. The vein information may be entered through not only the palm but any fingers.

Similarly, when palm information based on palm shape is entered as physical information, an image input device such as a camera or scanner is used that can capture images of the whole hand. When fingerprint information is entered as physical information, an image input device such as a camera or scanner is used to enter a fingerprint from a fingertip.

Figure 7(b) illustrates the authentication device 10 in which the communication terminal 106 is positioned to correspond to a fingertip of a spread palm. Specifically, an exemplary layout of the communication terminal 31 in the vein sensor is shown.

The sensor section 102 is disposed substantially horizontally and upwardly with respect to ground, as in Figure 7(a). The support section 104 is disposed such that it extends out substantially perpendicularly with respect to the sensor section 102. The communication terminal 106 is disposed on the support section 104 and in contact with the fingertip portions of a spread palm.

When placing the authentication portion 108 over the sensor section 102, the user touches the communication terminal 106 on the support section 104 with a fingertip for positioning. The position to be touched with a fingertip may be indicated by a marking on the support section 104. Alternatively, the user may be asked to place a fingertip, using the input and output section 50 of the authentication device 10.

By the action that sets the authentication portion 108a in position when the palm is held up over the sensor section 102 to enter physical information, the communication contact portion 108b is in contact with the communication terminal 106. This enables entry of physical information and communications in one action without moving different body parts for these purposes.

Figure 7(c) represents an embodiment in which the communication terminal 106 is positioned to correspond to a thumb of a spread palm. Specifically, an exemplary layout of the communication terminal 31 in the palm sensor is shown.

The sensor section 102 is disposed horizontally and upwardly with respect to ground, as in Figures 7(a) and 7(b). The communication terminal 106 is provided in a portion on a surface of the sensor section 102. The user enters physical information by spreading his/her palm in direct contact with the sensor section 102. The communication terminal 106 is positioned to correspond to the thumb of the spread palm.

By the action that sets the authentication portion 108a in position when the palm is placed over the sensor section 102 to enter physical information, the authentication portion 108a is in contact with the communication terminal 106. This enables entry of physical information and communications in one action without moving different body parts for these purposes.

In the case where the authentication is success, data communications are performed as intended, in which data may be transmitted to the storage section 76 of the portable terminal 70 and stored therein.

In the case where the authentication has failed, data communications that are intended to prevent unauthorized use are performed, in which the information stored in the portable terminal 70 may be transmitted and received.

As described above, in the authentication device 10, it is preferable that the physical information be information obtained from at least one authentication portion 108a of a hand, and that the communication terminal be disposed in contact with at least one communication contact portion 108b of the same hand.

The authentication device 10 performs authentication with physical information using at least one authentication portion 108a selected from a hand, a finger, a wrist, and an arm. The body of the user is also used by the authentication device 10 for communications. As such, placing the arm over the capturing means for authentication brings the communication contact portion 108b in contact with the communication terminal 106. In this way, only one action is needed to sense physical information and perform communications at the same time, using only one hand.

Note that, the foregoing exemplary embodiment described using only one hand for authentication. However, authentication may be performed using both hands or other parts of body. Using one hand, however, is very effective since it does not require any other body part to be fixed and moved.

### [Second Embodiment]

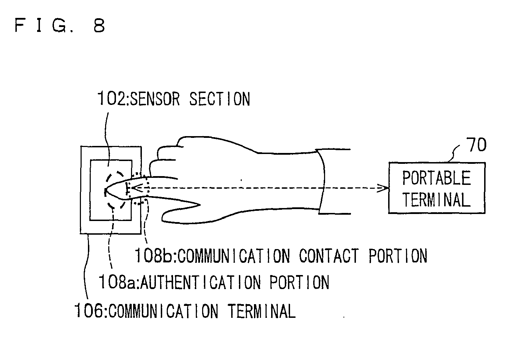

The following will describe another embodiment of the present invention with reference to Figure 8.

A sensor section 102 of the present embodiment differs from the sensor section 102 shown in Figure 7 in that physical information obtained from an authentication portion 108a of a fingertip is entered. The structures of the other functional members are the same. Specifically, the sensor section 102 is a fingerprint sensor, for example. In the following, members having the same functions as those described in the foregoing embodiment are given the same reference numerals and explanations thereof are omitted here.

Figure 8 is a diagram schematizing positions of the sensor sections 102 and the communication terminal 106 according to the present embodiment. In the example shown in Figure 8, the communication terminal 106 is disposed around the sensor section 102.

The communication terminal 106 is disposed in the vicinity of sides of the sensor section 102 such that it is naturally in contact with the communication contact portion 108b when the authentication portion 108a is placed over the sensor section 102 for the entry of fingerprint information. The communication terminal 106 may be disposed on any one side of the sensor section 102, or more than one side of the sensor section 102.

The sensor section 102 may be a fingerprint sensor of a contact-input type, or of a slide-input type when the communication terminal 106 and the authentication portion 108a require only a brief contact. That is, the sensor section 102 may have any shape as long as it has a layout that allows the communication contact portion 108b to be naturally brought into contact with the communication terminal 106 when entering the fingerprint information.

In the case where the authentication section 20 (Figure 1) has successfully authenticated the entered fingerprint information, data communications are performed as intended, in which the data may be transmitted to the storage section 76 of the portable terminal 70, for example.

In the case where the authentication has failed, data communications that are intended to prevent unauthorized use are performed, in which the information stored in the portable terminal 70 may be transmitted and received.

As described above, the sensor section 102 of the present embodiment is a fingerprint sensor, and the communication terminal 106 is disposed in the vicinity of sides of the sensor section 102 by surrounding the sensor section 102. In this way, the user is naturally in contact with the communication terminal 106 by placing the finger in any direction, not specific directions, with respect to the sensor section 102, when entering the fingerprint information. This enables sensing of physical information and the communications to be performed in one action.

### [Third Embodiment]

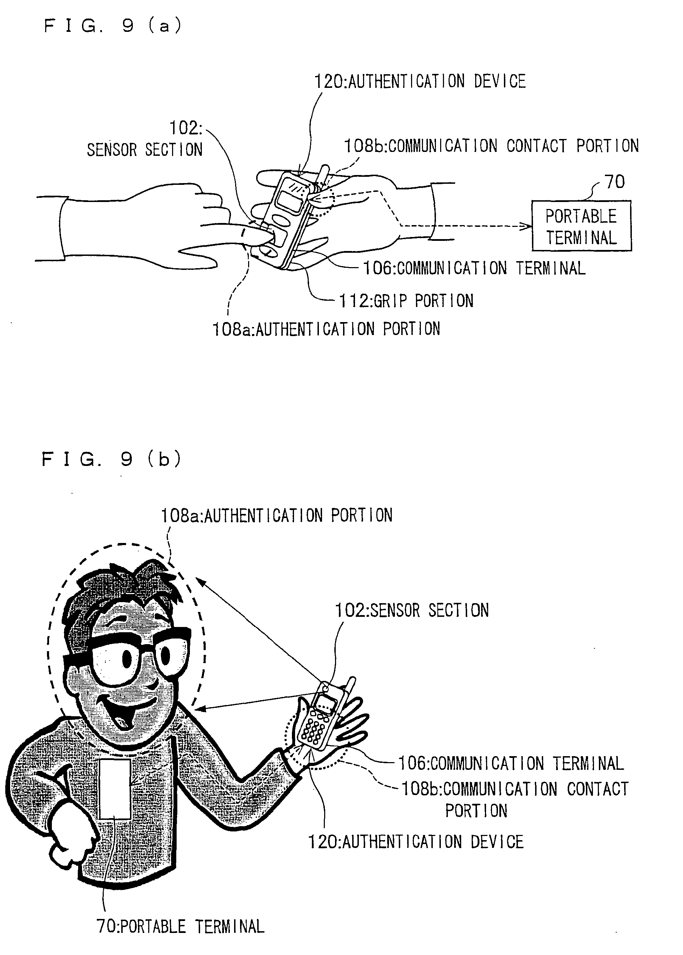

The following describe another embodiment of the present invention with reference to Figure 9.

An authentication device 120 of the present embodiment differs from the examples shown in Figures 7 and 8 in the shape of the cabinet of the authentication device 120, the structure of the sensor section 102, and the shapes of the communication terminal 106 and other structures provided around the sensor section 102. The structures of the other functional members are the same. Members having the same functions are given the same reference numerals and explanations thereof are omitted here.

Figure 9 is a diagram schematizing positions of the sensor section 102 and the communication terminal 106 according to the present embodiment. In Figure 6, a layout of the sensor section 102 and the communication terminal 106 is shown that are provided on surfaces of an authentication device 120. The authentication device 120 of the present embodiment is a small terminal, substantially cubic in shape, provided with the sensor section 102 on a front face, and the communication terminal 106 on a side face.

The communication terminal 106 may be provided on any of the rear face, front face, upper face, bottom face, and side faces of the terminal, and more than one of these faces.

Here, the authentication device 120 is described as a substantially cubic small terminal. However, the shape of the authentication device 120 is not just limited to this example. The authentication device 120 may have any shape as long as the sensor section 102 is fixed on the cabinet of the terminal, and that the direction of the sensor section 102 is set by tilting or moving the cabinet with its grip portion held by a hand of the user.

Figure 9(a) represents an example in which a fingerprint sensor is used for the sensor section 102 used to enter the physical information. The authentication device 120 is substantially cubic in shape with the sensor section 102 on the front face. A grip portion 112 is held by the authentication portion 108a of the user. The authentication device 120 may have shapes other than the substantial cube.

The communication terminal 106 is positioned such that it is naturally in contact with the communication contact portion 108b when the user holds the grip portion 112 with the communication contact portion 108b on his/her right hand. The communication terminal 106 may be provided on the rear face of the authentication device 120, or on both side faces of the authentication device 120. In the case where the authentication device 120 is intended to be held with the both hands, the communication terminal 106 may be provided over the front, side, and rear faces of the authentication device 120.

Here, the sensor section 102 is a fingerprint sensor, and is provided on the front face of the authentication device 120. The user enters the fingerprint information by pressing or sliding the authentication portion 108a of his/her left hand on the sensor section 102, using a finger of the hand not holding the authentication device 120.

In the case where the authentication section 20 (not shown) has successfully authenticated the fingerprint information entered through the sensor section 102, data communications are performed as intended, in which the data may be transmitted to the storage section 76 of the portable terminal 70, for example.

In the case where the authentication has failed, data communications that are intended to prevent unauthorized use are performed, in which the information stored in the portable terminal 70 may be transmitted and received.

Figure 9(b) shows an example in which a camera is used for the sensor section 102 used to enter physical information. The sensor section 102 is provided on the front face of the authentication device 120. The user holds the authentication device 120 with the fingers and palm of his/her left hand.

The communication terminal 106 is positioned such that it is naturally in contact with the communication contact portion 108b when the authentication device 120 is held. The communication terminal 106 may be provided on the front face, side faces, and/or upper and lower faces of the authentication device 120. In the case where the authentication device 120 is intended to be held with the both hands, the communication terminal 106 may be provided over the front, rear, side, and/or upper and lower faces of the authentication device 120.

Here, the sensor section 102 is a camera, and is provided on the front face of the cabinet of the authentication device 120. The user adjusts the direction of the sensor section 102 by moving or tilting the cabinet of the authentication device 120. Here, the physical information entered through the sensor section 102 uses facial characteristics or various other body parts such as retina or iris. In order to capture images of these body parts, the direction of the sensor section 102 is adjusted by tilting the cabinet of the authentication device 120.

In the case where the authentication section 20 (Figure 1) has successfully authenticated the fingerprint information entered through the sensor section 102, data communications are performed as intended, in which the data may be transmitted to the storage section 76 of the portable terminal 70, for example.

In the case where the authentication has failed, data communications that are intended to prevent unauthorized use are performed, in which the information stored in the portable terminal 70 may be transmitted and received.

As described above, the authentication device 120 of the present embodiment is substantially cubic in shape. The sensor section 102 is provided as capturing means disposed on the front face of the authentication device 120. The communication terminal 106 is disposed on at least one of the side, rear, and front faces of the authentication device 120.

The user holds the grip portion 112 of the portable terminal 70 with his/her hand(s), and tilts the portable terminal 70 to fix the sensor section 102 in position facing the authentication portion 108a. The communication terminal 106 is naturally in contact with the hand when the cabinet of the portable terminal 70 is fixed in position for authentication. This enables sensing of physical information and communications to be performed in one action without moving different body parts for these purposes.

### [Fourth Embodiment]

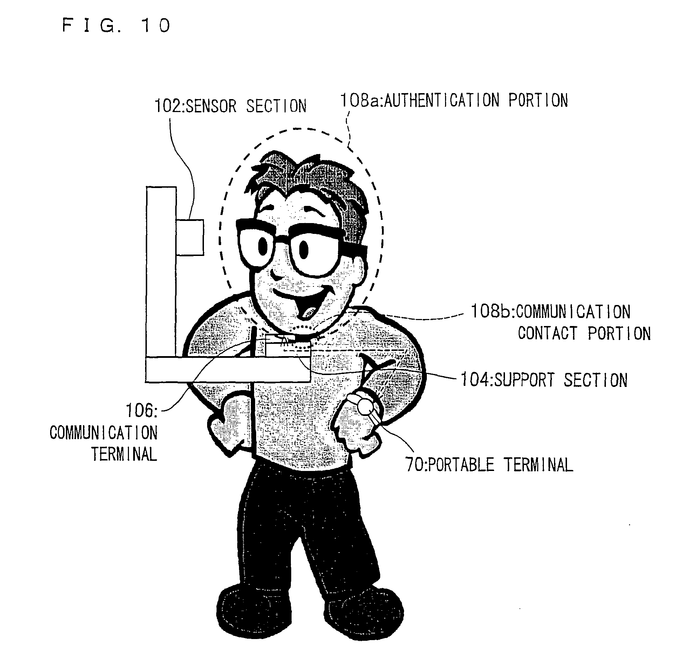

The following will describe another embodiment of the present embodiment with reference to Figure 10.

An authentication device 10 of the present embodiment differs from the examples shown in Figures 7 to 9 in the structure of the sensor section 102 and the shapes of the communication terminal 106 and other structures provided around the sensor section 102. The structures of the other functional members are the same. Note that, members having the same functions as those described in the foregoing embodiments are given the same reference numerals and explanations thereof are omitted here.

Figure 10 is a side view showing positions of the sensor section 102 and the communication terminal 106 according to the present embodiment. In Figure 10, an exemplary layout of sensor is shown that senses physical information from the authentication portion 108a, which may be a face, an eye, a mouse, a chin, a neck, or a head.

In the present embodiment, the sensor section 102 is an iris sensor, where physical information from the authentication portion 108a is entered. The sensor section 102 may also be realized by a retina sensor, a facial characteristic sensor, or other types of sensors that uses physical information from other parts of the face.

The sensor section 102 is disposed to extend horizontally toward a side face of a support section 104 that is disposed substantially perpendicular to ground. The support section 104 extends substantially perpendicular to a member on which the sensor section 102 is provided, and in a direction substantially horizontal to ground. The communication terminal 106 is disposed substantially horizontally on the support section 104. The support section 104 is positioned such that the communication contact portion 108b, which is a chin in this example, is properly in contact with the communication terminal 106 when the sensor section 102 captures the authentication portion 108a.

In the case where the authentication section 20 (not shown) has successfully authenticated the fingerprint information entered through the sensor section 102, data communications are performed as intended, in which the data may be transmitted to the storage section 76 of the portable terminal 70, for example.

In the case where the authentication has failed, data communications that are intended to prevent unauthorized use are performed, in which the information stored in the portable terminal 70 may be transmitted and received.

As described above, in the present embodiment, the physical information is information from at least one authentication portion, which may be a face, an eye, a mouth, a chin, a neck, or a head. The sensor section 102 is provided as sensing means that is disposed to face the authentication portion 108a. The communication terminal 106 is positioned such that it is in contact with the communication contact portion 108b, which is a chin in this example. The communication contact portion 108b may be a forehead, an ear, a nose, or other parts of face as well. That is, the communication terminal 106 is positioned such that it is naturally in contact with the communication terminal 106 when entering physical information of the authentication portion 108a in the sensor section 102.

The user performs authentication using at least one authentication portion 108a, which may be a face, an eye, a mouth, or a head. Communications using communication are also performed. The communication contact portion 108b is in contact with the communication terminal 106 when the authentication portion 108a is placed in front of the sensor section 102 for authentication. This enables sensing of physical information and communications to be performed in one action without moving different body parts for these purposes.

### [Fifth Embodiment]

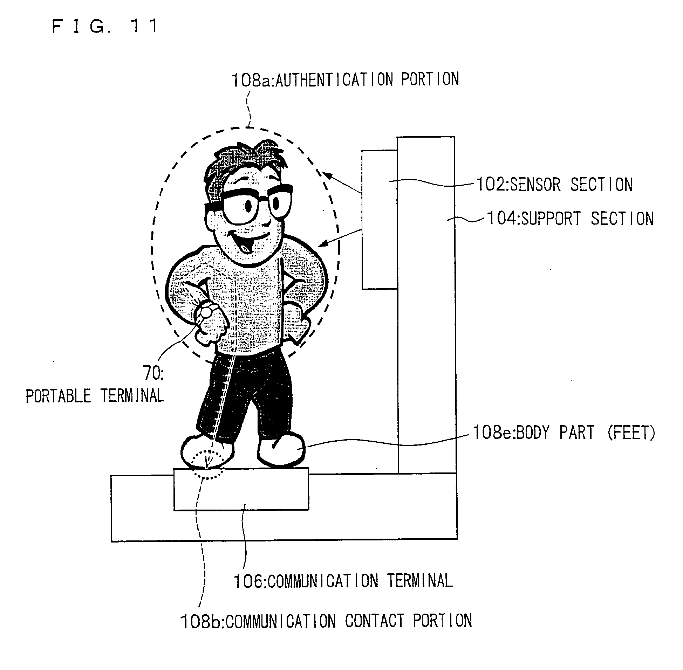

The following will describe another embodiment of the present invention with reference to Figure 11.

The present embodiment differs from the examples shown in Figures 7 to 10 in the structure of the sensor section 102, and the shapes of the communication terminal 106 and other structures around the sensor section 102. The structures of the other functional members are the same. Members having the same functions as those described in the foregoing embodiments are given the same reference numerals and explanations thereof are omitted here.

Figure 11 is a side view showing positions of the sensor section 102 and the communication terminal 106 according to the present embodiment. In Figure 11, an exemplary layout of sensor is shown that performs authentication using physical information of any body part.

The sensor section 102 may be a sensor that uses, for example, the retina, facial characteristics, physique, bone structure, vein, palm shape, voiceprint, or any other physical information. The sensor section 102 may be positioned such that the user only needs to stand at a communication terminal 108 when entering physical information.

The sensor section 102 is disposed along a side face of a support section that is disposed substantially perpendicular to ground. The support section 104 extends substantially perpendicularly with respect to a portion where the sensor section 102 is installed. The communication terminal 106 is disposed on the support section substantially horizontally with respect to ground. The support section 104 may be embedded in ground as long as the user can step on it.

The user enters physical information by standing or sitting in front of the sensor section 102. The user stands or sits on a position where the physical information from the authentication portion 108a can be entered in the sensor section 102. The communication terminal 106 is disposed at a position that allows for entry of physical information and where the communication terminal 106 is in contact with the communication contact portion 108b of the user, which is a foot in this example.

The user may stand at a position marked on ground or the support section 104, or may sit on a preinstalled chair and place his/her feet, hip, buttok, back, neck, or hand on a predetermined position. In this way, the user can enter physical information and perform communication at the same time.

In the case where the authentication section 20 (not shown) has successfully authenticated the fingerprint information entered through the sensor section 102, data communications are performed as intended, in which the data may be transmitted to the storage section 76 of the portable terminal 70, for example.

In the case where the authentication has failed, data communications that are intended to prevent unauthorized use are performed, in which the information stored in the portable terminal 70 may be transmitted and received.

As described above, in the authentication device 10 of the present embodiment, the physical information is information obtained from the authentication portion 108a. The sensor section 102 is provided as sensing means that is disposed to face the authentication portion 108a of the user who may be standing or sitting. The communication terminal 106 is disposed at a position so that it is in contact with the communication contact portion 108b of the user who may be standing or sitting.

The user places the authentication portion 108a in front of the sensor section 102 by standing on a position where the communication terminal 106 is disposed. Since this brings the communication contact portion 108b into contact with the communication terminal 106, sensing of physical information and communications can be performed in one action without moving different body parts for these purposes.

A communication device of the present invention may be adapted so that the communication terminal is in direct contact with the body of the user.

A communication device of the present invention may be adapted so that the communication terminal is in indirect contact with the body of the user.

As used herein, "in indirect contact" means that contact is made via wardrobes or ornaments such as, for example, clothes, gloves, shoes, socks, bracelets, hair bands, and wrist bands.

It is preferable in the communication device that the communication terminal perform communications via the communication terminal when the authentication by the authentication means is success.

According to this arrangement, the communication contact portion of the user is in contact with the communication terminal by the action that enables the authentication process with the authentication portion. In this way, the user does not need to move his/her body part when authentication is success. Rather, communications and authentication can be performed at the same time in one action.

Note that, the data transmitted and received in the data communications may be log information of communications with the communication device owned by the user, or information concerning results of authentication by the authentication means. Further, the information in the data communications may be information concerning fees for using the communication device, or information concerning rights on admission cards, tickets, and pre-paid cards. Alternatively, the data transmitted and received in the communications may be personal information stored in the communication device owned by the user, or other kinds of data such as terminal information, for example.

It is preferable in a communication device of the present invention that the communication means authenticate a terminal owned by the user via the communication terminal when the authentication based on the physical information is success.

With this arrangement, by authenticating both the user and the terminal, the accuracy of authentication can be improved.

It is preferable in a communication device of the present invention that the communication means transmit the physical information to a terminal owned by the user via the communication terminal and causes the terminal to perform authentication with the physical information, when the authentication based on the physical information is success.

With this arrangement, the ownership of the user terminal can be verified while the user is authenticated by the communication device. This improves accuracy of authentication.

It is preferable that the communication means transmit an error log of authentication to a terminal owned by the user via the communication terminal, when the authentication by the authentication means has failed.

With this arrangement, the user is in contact with the communication terminal by the action that enables the authentication process. In this way, by the data communications using communication, the information concerning results of authentication can be stored, for example, in the communication terminal owned by the user.

The transmission of information concerning results of authentication can be used as guidance whether the communication terminal held by the user is being used by an unauthorized user.

It is preferable that the communication means transmit an error log of authentication to a terminal owned by the user via the communication terminal, when the authentication by the authentication means has failed.

With this arrangement, when the authentication process using physical information has failed, the communication device may communicate, for example, with the communication device owned by the user, and obtain security information stored in the communication terminal to perform a process for the authentication error.

Note that, the security information may be a serial number of the communication device, or distinct information such as MAC address. Further, the security information may be information concerning the owner of the communication terminal, or a log indicative of the time the terminal was used last time.

The transmission of the security information can be used as further guidance whether the communication device is being used by an unauthorized user.

Examples of an error process for the authentication error include: obtaining security information of the communication device owned by the user; storing the security information; sending an alert to the contact address contained in the security information; capturing images of the user being authenticated; and alerting the authenticated user with light, sound, vibration, or the like.

The error process may be freely selected from the processes as exemplified above, or other security processes may be performed. Further, an alert may be sent to a contact address to determine whether the portable communication terminal is being used without authorization.

It is preferable in the a communication device of the present invention that the physical information be information sensed from at least one authentication portion selected from body parts of the user, and that the communication terminal be disposed to be brought into contact with at least one body part of the user.

With this arrangement, authentication and communication are performed using at least part of the user's body as an authentication portion and a portion in contact with the communication terminal. This enables sensing of physical information and communications to be performed in one action, without moving different body parts for these purposes.

This arrangement is also effective in terms of miniaturization of the communication device as a whole including the sensing means and the communication terminal.

In the foregoing arrangement, the sensing means may be realized by, for example, a fingerprint sensor, a palm shape sensor, or a vein sensor.

It is preferable in the communication device that the sensing means be capturing means, provided on a cabinet, for capturing the authentication portion of the body of the user, and that the communication terminal be disposed to enable communications within a capturing area of the capturing means.

With this arrangement, the communication terminal is provided on a grip portion of a cabinet of the communication terminal. In this way, by holding the cabinet such that the capturing means faces the authentication portion of the user's body for authentication, the communication contact portion of the user is in contact with the communication terminal at the same time.

That is, sensing of physical information and communications can be performed in one action without moving different body parts for these purposes.

This attains miniaturization of the communication device as a whole including the sensing means and the communication terminal. Further, the entire communication device including the sensing means and the communication terminal can readily be realized, for example, using a portable phone, a PDA, an electronic card, and a PC.

In the foregoing arrangement, the sensing means may be realized by, for example, a fingerprint sensor, a palm shape sensor, a retina sensor, an iris sensor, a voiceprint sensor, or a facial characteristic sensor.

A communication system of the present invention includes: the communication device; and a terminal, owned by the user, capable of performing communications with the communication device via the body of the user.

In this way, a communication system is realized that enables sensing of physical information and communications to be performed in one action without moving different body parts for these purposes.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICABILITY

A communication device of the present invention enables sensing of physical information and communications to be performed in one action without separately moving different body parts for these purposes. A communication device of the present invention is therefore suitable for various kinds of authentication devices such as an entry/exit control system, a self-locking door, a computer login system, a keyless entry system, an automated refund machine, and a settlement device for digital money.

## Claims

1. A communication device comprising:
communication means for transmitting and receiving information via a body of a user;
a communication terminal which is brought into contact with the body of the user when the communication means performs communications;
sensing means for sensing physical information, which is information unique to the body of the user, from an authentication portion of the body of the user; and
authentication means for authenticating the user based on the physical information sensed by the sensing means from the authentication portion,
the communication terminal being disposed to enable communications via the body of the user when the sensing means senses the physical information from the authentication portion.

2. The communication device as set forth in claim 1, wherein the communication terminal is in direct contact with the body of the user.

3. The communication device as set forth in claim 1, wherein the communication terminal is in indirect contact with the body of the user.

4. The communication device as set forth in claim 1, wherein the communication means performs communications via the communication terminal when the authentication by the authentication means is success.

5. The communication device as set forth in claim 1, wherein the authentication means authenticates a terminal owned by the user via the communication terminal when the authentication based on the physical information is success.

6. The communication device as set forth in claim 1, wherein the communication means transmits the physical information to a terminal owned by the user via the communication terminal and causes the terminal to perform authentication with the physical information, when the authentication based on the physical information is success.

7. The communication device as set forth in claim 1, wherein the communication means transmits an error log of authentication to a terminal owned by the user via the communication terminal, when the authentication by the authentication means has failed.

8. The communication device as set forth in claim 1, wherein the communication means receives security information from a terminal owned by the user via the communication terminal, when the authentication by the authentication means has failed.

9. The communication device as set forth in claim 1,
wherein the physical information is information sensed from at least one authentication portion selected from body parts of the user, and
wherein the communication terminal is disposed to be brought into contact with at least one body part of the user.

10. The communication device as set forth in claim 1,
wherein the sensing means comprises capturing means, provided on the cabinet, for capturing the authentication portion of the body of the user, and
wherein the communication terminal is disposed to enable communications within a capturing area of the capturing means.

11. A communication system comprising:
a communication device of any of claims 1 through 10; and
a terminal, owned by the user, capable of performing communications with the communication device via the body of the user.

CLAIMS: (Amendment under PCT Article 19)
(Amended) A communication device comprising:
communication means for transmitting and receiving information via a body of a user;
a communication terminal which is brought into contact with the body of the user when the communication means performs communications;
sensing means for sensing physical information, which is information unique to the body of the user, from an authentication portion of the body of the user; and
authentication means for authenticating the user based on the physical information sensed by the sensing means from the authentication portion,
the communication terminal being disposed to enable communications, via the body of the user, with a terminal owned by the user, when the sensing means senses the physical information from the authentication portion.
The communication device as set forth in claim 1, wherein the communication terminal is in direct contact with the body of the user.
The communication device as set forth in claim 1, wherein the communication terminal is in indirect contact with the body of the user.
The communication device as set forth in claim 1, wherein the communication means performs communications via the communication terminal when the authentication by the authentication means is success.
The communication device as set forth in claim 1, wherein the authentication means authenticates a terminal owned by the user via the communication terminal when the authentication based on the physical information is success.
The communication device as set forth in claim 1, wherein the communication means transmits the physical information to a terminal owned by the user via the communication terminal and causes the terminal to perform authentication with the physical information, when the authentication based on the physical information is success.
The communication device as set forth in claim 1, wherein the communication means transmits an error log of authentication to a terminal owned by the user via the communication terminal, when the authentication by the authentication means has failed.
The communication device as set forth in claim 1, wherein the communication means receives security information from a terminal owned by the user via the communication terminal, when the authentication by the authentication means has failed.
